# EUROPEAN PATENT SPECIFICATION

(11) **EP 0 972 447 B1**
(45) Date of publication and mention of the grant of the patent: **02.05.2003**
(21) Application number: 99305549.0
(22) Date of filing: 13.07.1999
(51) Int. Cl.: A01N 47/30, A01N 43/58, A01N 43/56, A01N 43/54, A01N 37/02

(54) **Parasitic and saprophagous mite control on beneficial insects**
Kontrolle parasitärer und saprophager Milben bei Nutzinsekten
Lutte contre des mites parasitaires et saprophages chez des insectes utiles

(30) Priority: 14.07.1998 US 115091
(43) Date of publication of application: 19.01.2000
(73) Proprietor: BASF AKTIENGESELLSCHAFT, 67056 Ludwigshafen (DE)
(72) Inventor: Black, Bruce Christian, Yardley, Pennsylvania 1967 (US); Baumbach, Robert William, Hopewell, New Jersey 08525 (US); Beluch, Michael Paul, Belle Mead, New Jersey 08502 (US)
(74) Representative: Langfinger, Klaus Dieter, Dr.

(56) References cited:
- EP-A- 0 972 770
- WO-A-94/02470
- WO-A-97/47193
- C.TOMLIN: "The Pesticide Manual" 1997 , BRITISH CROP PROTECTION COUNCIL , UK XP002129953 * compound No.315 *

## Description

### BACKGROUND OF THE INVENTION

Beneficial insects, particularly the honeybee, are susceptible to infestation and damage caused by parasitic mites. Recently, a plague of parasitic mites has significantly decreased the honeybee population. Honeybees are important for crop pollination and aid in fruit formation and size and enhance crop yield. Measures of control of the parasitic mite populations are few and unpredictable.

Parasitic and saprophagous mites are a serious threat for many cultured insects used for scientific research and for production of insect hosts for biocontrol agents. Saprophagous mites such as *Histiostoma* sp. and parasitic mites such as *Proctolaelaps* sp. may cause significant loss of Drosophila stock cultures commonly used for scientific research. Decreased fitness of mite-infested Drosophila cultures may complicate the interpretation of genetic crosses. Moreover, various parasitic and saprophagous mite species greatly interfere with the rearing of roaches, house flies, beetles, crickets, white flies, thrips, aphids, and lepidoptera. The inability to effectively control mite infestations using conventional methods may result in the loss of valuable insect cultures. Further, production of extremely large insect colonies such as those used for silkworm production, for bait, for sterile insect release programs, (i.e. the Mediterranean Fruit Fly, Gypsy Moth, Screwworm Fly) and the like, are vulnerable to mite infestation and the damage and loss caused thereby. Also, the propagation of biocontrol agents such as *Diptera* (*Spalagiodae* and *Tachinidae*) for the biocontrol of flies *(Diptera)* and *Hymenoptera* (*Trichogrammatidae, Ichneumonidae, Braconidae, Apidae, Eulophidae, Chalcididae,* and *Spalangiadae*) for the biocontrol of *Lepidoptea, Coleoptera, Diptera* and *Homoptera* require healthy insect hosts. The propagation of viral biocontrol agents (baculoviruses, granuloviruses, and emtomapox viruses) may also be seriously affected by the presence of mites. Currently there are no effective means to rid insect colonies of these dangerous parasitic and saprophagous mites.

Therefore, new methods are needed to provide selective control of parasitic and saprophagous mites on beneficial insects and protection of said insects from infestation and damage caused by parasitic and saprophagous mites with little or no concommitant harm to the beneficial host insect.

### SUMMARY OF THE INVENTION

The present invention provides a method for the protection of beneficial insects from infestation and damage caused by parasitic or saprophagous mites which comprises applying to said insects, their breeding ground or habitat a parasiticidally effective amount of a formula I pyrimidine compound known from WO 94/02470 and EP 0 972 770 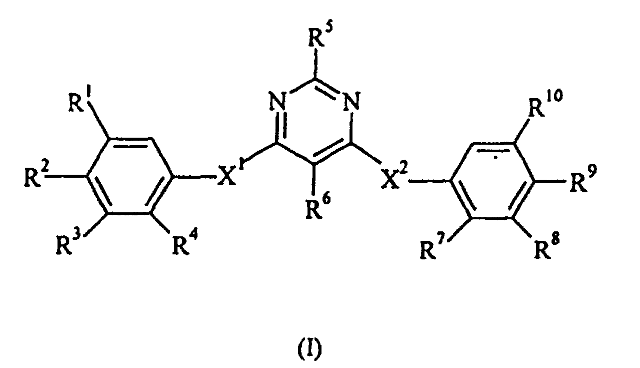 wherein
- X¹ and X²: are each independently O, S(O)_{n,} CO, CH₂, or NR;
- n: is 0, 1, or 2;
- R: is hydrogen or C₁-C₆alkyl;
- R¹ and R¹⁰: are each independently hydrogen or halogen;
- R² and R⁹: are each independently hydrogen, halogen, CN, NO₂, C₁-C₆haloalkyl, C₁-C₆alkoxy, C₁-C₆alkylthio, NR¹¹R¹², C₁-C₆alkoxycarbonyl or C₁-C₆alkyl optionally substituted with one or more C₁-C₄alkoxy or C₁-C₄ haloalkoxy groups;
- R¹¹ and R¹²: are each independently hydrogen or C₁-C₆alkyl;
- R³ and R⁸: are each independently hydrogen, chlorine, CN, NO₂, C₁-C₆haloalkyl, C₂-C₆haloalkenyl, C₂-C₆haloalkynyl, C₁-C₆haloalkoxy, C₁-C₆haloalkylthio, C₁-C₆ haloalkylsulfinyl, C₁-C₆haloalkylsulfonyl, C₁-C₆haloalkoxycarbonyl, or C₁-C₆alkyl optionally substituted with one or more C₁-C₄alkoxy groups;
- R⁴ and R⁷: are each independently hydrogen, halogen, C₁-C₆alkyl or C₁-C₆alkoxy;
- R⁵: is hydrogen, halogen, CN, C₁-C₆alkyl, C₁-C₆haloalkyl, C₁-C₆alkoxy, C₁-C₆alkylthio, C₁-C₆alkylsulfinyl or phenyl; and
- R⁶: is hydrogen or C₁-C₆ alkyl, provided that when R⁶ is C₁₋C₆ alkyl, then R⁵ must be hydrogen.

Preferred formula I compounds are those wherein either each of the two phenyl rings is unsubstituted or at least one of R³ and R⁸ is other than hydrogen.

As used herein the term "parasiticidally effective" is defined to be less than the effective LD₅₀ for the beneficial insect (dosage rate required to obtain 50% mortality of healthy uninfected insects), but sufficient to control or suppess the infestation of parasitic mites and/or saprophagus mites.

The invention further provides a method for the selective control of parasitic mites in the presence of beneficial insects.

### DETAILED DESCRIPTION OF THE INVENTION

Beneficial insects such as *Apidae,* for example, *Apinae* (honeybees), *Bombinae* (bumblebees) and *Euglossinae* (orchid bees) are susceptible to attack and infestation by parasitic mites, particularly mites such as *Varroa jacobsoni* (Varroa mites), *Acarapis woodi* (tracheal mites) and *Tropilaelaps clareae.* These parasites feed on the insect's blood via the trachea (tracheal mites), via the cuticle from the brood or adult (Varroa mites) or the larvae *(T. clareae*) causing physical deformation, deterioration and death. Further, parasitic mites may either transmit or "trigger" viruses in honeybees and other beneficial insects. Currently, a plague of parasitic mites has caused significant global concern over the present and future populations of essential agronomically important insects such as the honeybee.

Further, saprophagous mites such as *Histiostoma* sp. and parasitic mites such as *Proctolaelaps* sp. cause significant loss of Drosophila stock cultures commonly used for scientific research. Various parasitic and saprophagous mite species greatly interfere with the rearing of roaches, houseflies, beetles, crickets, white flies, thrips, aphids, and lepidoptera. Mite infestation control on beneficial insects using conventional miticidal methods currently results in the loss of valuable insect cultures, decreased propagation of biocontrol agents which require healthy insect hosts, and decreased propagation of viral biocontrol agents.

Effective miticides that discriminate between the insect host and parasitic or saprophagous mites have heretofore not been identified. The performance of current miticides on beneficial insects yields unpredictable results and incomplete control. Surprisingly, it has now been found that a formula I pyrimidine compound may be used to effectively control parasitic and saprophagous mites in the presence of beneficial insects and for the protection of said insects from the infestation and damage caused by parasitic and saprophagous mites. Advantageously, the method of the invention may be used to control both the Varroa mite and the tracheal mite in the presence of beneficial insects, particularly honeybees, with little or no significant harmful effect to the insect host. Further, the method of the invention may be used to control parasitic and saprophagous mite populations in insect colonies committed to scientific research and the production of insect biocontrol agents. Many pyrimidine compounds, including the formula I pyrimidine compounds, methods for their preparation and the insecticidal and acaricidal uses thereof are described in US 5,707,995 and WO 98/12184. Among the broad class of pyrimidine compounds described, surprisingly, it has now been found that those particular pyrimidine compounds of formula I are useful for the protection of beneficial insects from infestation and damage caused by parasitic mites.

Preferred pyrimidine compounds of formula I useful in the method of the invention are those compounds
wherein X¹ and X² are each O or NR;
R¹, R³, R⁸ and R¹⁰ are each independently hydrogen or trifluoromethyl, with the proviso that at least one of R¹, R³, R⁸, and R¹⁰ must be trifluoromethyl;
R² and R⁹ are each independently hydrogen, chlorine or fluorine; and
R⁴, R⁵, R⁶, and R⁷ are hydrogen.

More preferred formula I pyrimidine compounds useful in the inventive method are 4-[(4-chloro-α,α,α-trifluoro-*m*-tolyl)oxy]-6-[(α,α,α, 4-tetrafluoro-*m*-tolyl)oxy]pyrimidine; 4-(α,α,α,4-tetrafluoro-N-methyl-*m*-toluidino)-6-[(α,α,α,4-tetrafluoro-*m*-tolyl)oxy]pyrimidine; and 4,6 bis[(α,α,α 4-tetrafluoro-*m*-tolyl)oxy]pyrimidine.

In actual practice a formula I pyrimidine compound may be applied to the beneficial insect breeding ground or habitat such as a beehive, nest, brood chamber, or the like using a conventional delivery system. For example, formula I pyrimidines may be applied to mite-infested beneficial insect colonies or research laboratory insect cultures in the form of diet incorporation, or by insertion into the colony or culture of an impregnated strip, or by utilization of available standard delivery systems. Effective amounts of the formula I pyrimidine compound will vary according to the miticidal sensitivity of the beneficial insect species, the degree of mite infestation, the insect population density, habitat construction, weather conditions, the timing of the beneficial insect life cycle, and the like. In general, parasiticidally effective amounts may be about 0.001 - 10µg per insect.

For a more clear understanding of the invention, the following examples are set forth below.

### EXAMPLE 1

### Evaluation Of The Efficacy Of Formula I Pyrimidines Against Varroa jacobsoni Parasites

In this evaluation, honeybees (*Apis mellifera*) taken from hives which are 70% infested with *Varroa jacobsoni* (Varroa mites) are chilled to immobilize the bees. A 1µl droplet of an acetone solution of test compound is applied to the dorsal abdomen of each bee. Control bees receive a 1µl droplet of acetone. A total of 50-52 bees are treated for each dose rate tested. Treatment dose rates are based upon the LD₅₀ (dose rate required to obtain 50% mortality of healthy uninfected bees) of each test compound and are set at 10% of the LD₅₀ and subsequent 10-fold dilutions thereof. The treated bees are placed in an incubator at 31°C in the dark and fed 50% sugar water *ad libitum* for 5 days. After incubation, the bees are examined for mortality and mite infestation.
The results are shown in Table I below.

**Table I**

| **Test Compound**^{**1**} | **Dose** | **% Mortality** | |
|---|---|---|---|
| | **(µg/bee)** | **Bees** | **Parasites** |
| A | 0.08 | 21 | 75 |
| A | 0.8 | 13 | 100 |
| A | 8:0 | 21 | 92 |
| | | | |
| B | 0.002 | 16 | 6 |
| B | 0.02 | 14 | 36 |
| B | 0.2 | 10 | 88 |
| | | | |
| Control | 0.0 | 14 | 0 |

| | | | |
|---|---|---|---|
| ¹Test Compound A = 4-(α,α,α,4-tetrafluoro-N-methyl-*m*-toluidino)-6-[(α,α,α,4-tetrafluoro-m-tolyl)oxy]pyrimidine ¹Test Compound B = 4,6 bis[(α,α,α 4-tetrafluoro-*m*-tolyl)oxy]pyrimidine | | | |

### EXAMPLE 2

### Evaluation Of The Efficacy Of Formula I Pyrimidines Aqainst Varroa jacobsoni Parasites

Using essentially the same procedure described in Example 1, but employing honeybees which are 90% infected with *Varroa jacobsoni*, the following results are obtained and shown in Table II below.

**Table II**

| **Test Compound**¹ | **Dose** | **% Mortality** | |
|---|---|---|---|
| | **(µg/bee)** | **Bees** | **Mites** |
| C | 0.01 | 13 | 8 |
| | 0.10 | 12 | 80 |
| | 1.00 | 16 | 91 |
| | | | |
| Control | 0.0 | 10 | 14 |

| | | | |
|---|---|---|---|
| ¹Test Compound C = 4-(α,α,α,4-tetrafluoro-N-methyl-*m*-toluidino)-6-[(α,α,α,4-tetrafluoro-*m*-tolyl)oxy]pyrimidine | | | |

### EXAMPLE 3

### Evaluation Of The Efficacy Of Formula I Pyrimidines Against Acarapis woodi Parasites

In this evaluation, honeybees (*Apis mellifera*) which are infested with *Acarapis woodi* (trachea mites) are dissected to remove the infested tracheae. Glass microscope slides are dipped into acetone solutions of test compound (500 ppm) and the acetone is allowed to evaporate. Infested tracheae are placed directly on the treated slides. The mites are removed from the tracheae by dissection and forced to walk across the treated area.
The elapsed time is recorded for 100% mortality, i.e. no movement is observed upon agitation. The results are shown in Table III below.

**Table III**

| | **Rep. 1** | | **Rep. 2** | | **Rep. 3** | |
|---|---|---|---|---|---|---|
| **Test Compound**^{**1**} | **No. mites** | **Time**^{**2**} | **No. mites** | **Time** ^{**2**} | **No. mites** | **Time** ^{**2**} |
| C | 4 | 16 | 3 | 16 | 4 | 15 |
| Control | 6 | >35 | 4 | >25 | - | - |

| | | | | | | |
|---|---|---|---|---|---|---|
| ¹Test Compound C = 4-[(4-chloro-α,α,α-trifluoro-*m*-tolyl)oxy]-6-[(α,α,α, 4-tetrafluoro-*m*-tolyl)-oxy]pyrimidine | | | | | | |
| ²Time required in minutes to achieve 100% mortality. | | | | | | |

### EXAMPLE 4

### Evaluation of the Efficacy of Formula I Pyrimidines Against Proctolaelaps Sp. and Histiostoma Sp. Mites

Paper towel strips (2 x 7cm) are dipped into an acetone solution of test compound and allowed to dry.

Control paper towel strips are dipped into acetone and allowed to dry. Treated strips are placed in 2.5 x 9.5cm culture vials containing a standard cornmeal-molasses-agar diet, such that the strips are inserted about 1 cm into the diet. Five pairs of heavily infested, newly emerged *Drosophila melanogaster* are placed into the test vials and incubated at 25 °C. After 5 days, the adult flies are evaluated for % mortality and are removed rom each test vial. After 15 days, the mites [*Proctoloaelaps* sp.(Proct) and *Histiostoma* sp.(Hist)] and insect larva/pupa are evaluated for mortality and recorded as a percent of expected progeny as determined by the untreated control. At 14 days approximately 200 - 500 *Histiostoma* sp. mites (Hist) and approximately 50 *Proctolaelaps* sp. mites (Proct) are present in the untreated controls.

**TABLE V**

| **Test Compound**^{**1**} | **Dose (ppm)** | **% Mortality** | | | |
|---|---|---|---|---|---|
| | | **Drosophila** | | **Mites** | |
| | | **Adults** | **larvae** | **Proct** | **Hist** |
| C | 100 | 100 | 73 | 100 | 100 |
| C | 50 | 20 | 53 | 100 | 100 |
| C | 10 | 15 | 0 | 40 | 90 |
| | | | | | |
| Control | 0 | 10 | 0 | 0 | 0 |

| | | | | | |
|---|---|---|---|---|---|
| ¹Test Compound C = 4-[(4-chloro-α,α,α-trifluoro-*m*-tolyl)oxy]-6 [(α,α,α, 4-tetrafluoro-*m*-tolyl)-oxy]pyrimidine | | | | | |

## Claims

1. A method for the protection of beneficial insects from infestation and damage caused by parasitic or saprophagous mites which comprises applying to said insects, their breeding ground or habitat a parasiticidally effective amount of a formula I pyrimidine compound 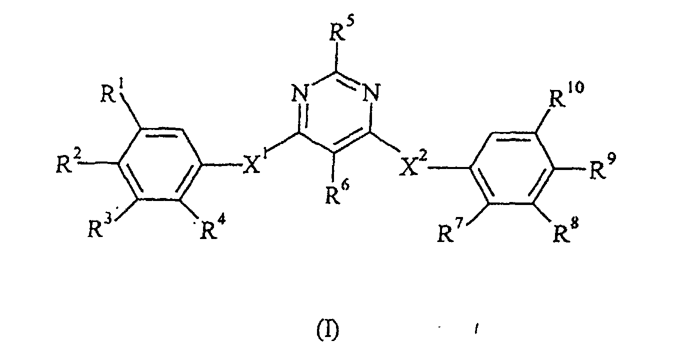 wherein
X¹ and X² are each independently O, S(O)_{n,} CO, CH₂, or NR;
n is 0, 1, or 2;
R is hydrogen or C₁-C₆alkyl;
R¹ and R¹⁰ are each independently hydrogen or halogen;
R² and R⁹ are each independently hydrogen, halogen, CN, NO₂, C₁-C₆haloalkyl, C₁-C₆alkoxy, C₁-C₆alkylthio, NR¹¹R¹², C₁-C₆alkoxycarbonyl or C₁-C₆alkyl optionally substituted with one or more C₁-C₄alkoxy or C₁ C₄haloalkoxy groups;
R¹¹ and R¹² are each independently hydrogen or C₁-C₆alkyl;
R³ and R⁸ are each independently hydrogen, chlorine, CN, NO₂, C₁-C₆haloalkyl, C₂-C₆haloalkenyl, C₂-C₆haloalkynyl, C₁-C₆haloalkoxy, C₁-C₆haloalkylthio, C₁-C₆-haloalkylsulfinyl, C₁-C₆haloalkylsulfonyl, C₁-C₆haloalkoxycarbonyl, or C₁-C₆alkyl optionally substituted with one or more C₁-C₄alkoxy groups;
R⁴ and R⁷ are each independently hydrogen, halogen, C₁-C₆alkyl or C₁-C₆alkoxy;
R⁵ is hydrogen, halogen, CN, C₁-C₆alkyl, C₁-C₆haloalkyl, C₁-C₆alkoxy, C₁-C₆alkylthio, C₁-C₆alkylsulfinyl or phenyl; and
R⁶ is hydrogen, or when R₅ is hydrogen, C₁-C₆alkyl.

2. A method for the control of parasitic or saprophagous mites in the presence of beneficial insects which comprises contacting said mites, their breeding grounds or habitat with a parasiticidally effective amount of a formula I pyrimidine compound described in claim 1.

3. The method according to claim 1 or 2 wherein the formula I compound has either each of the two phenyl rings is unsubstituted or at least one of R³ and R⁸ being other than hydrogen.

4. The method according to claim 3 having a formula I pyrimidine compound wherein X¹ and X² are each O or NR;
R¹, R³, R⁸ and R¹⁰ are each independently hydrogen or trifluoromethyl;
R² and R⁹ are each independently hydrogen, chlorine or fluorine; and
R⁴, R⁵, R⁶, and R⁷ are hydrogen.

5. The method according to claim 4 wherein the formula I pyrimidine compound is selected from the group consisting of 4-[(4-chloro-α,α,α-trifluoro-*m*-tolyl)oxy]-6-[(α,α,α, 4-tetrafluoro-*m*-tolyl)oxy]pyrimidine; 4-(α,α,α,4-tetrafluoro-N-methyl-*m*-toluidino)-6-[(α,α,α,4-tetrafluoro-*m*-tolyl)oxy]pyrimidine; and 4,6 bis[(α,α,α 4-tetrafluoro-*m*-tolyl)oxy]pyrimidine.

6. The method according to claim 1 or 2 wherein the beneficial insects are *Hymenoptera, Diptera* or *Lepidoptera*.

7. The method according to claim 1 or 2 wherein the parasitic mites are selected from the group consisting of *Varroi jacobsoni, Acarapis woodi* and *Tropilaelaps clareae*.

8. The method according to claim 6 wherein the beneficial insects are *Hymenoptera* and the *Hymenoptera* are *Apidae*.

## Patentansprüche

1. Verfahren zum Schutz von nützlichen Insekten gegen Befall und Schädigung durch parasitierende und saprophage Milben, **dadurch gekennzeichnet, daß** man die Insekten, ihre Brutstätten oder ihren Lebensraum mit einer parasitizid wirksamen Menge einer Pyrimidinverbindung der Formel I 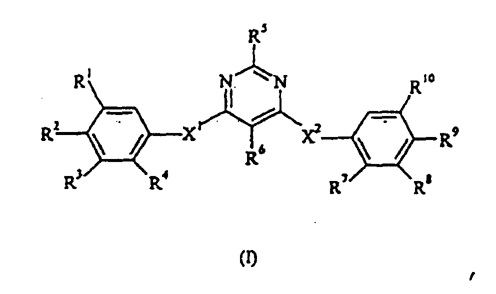 in der X¹ und X² jeweils unabhängig O, S(O)ₙ, CO, CH₂ oder NR bedeuten,
n 0, 1 oder 2 bedeutet,
R Wasserstoff oder C₁-C₆-Alkyl bedeutet,
R¹ und R¹⁰ jeweils unabhängig Wasserstoff oder Halogen bedeuten,
R² und R⁹ jeweils unabhängig Wasserstoff, Halogen, CN, NO₂, C₁-C₆-Halogenalkyl, C₁-C₆-Alkoxy, C₁-C₆-Alkylthio, NR¹¹R¹², C₁-C₆-Alkoxycarbonyl oder C₁-C₆-Alkyl, das gegebenenfalls durch eine oder mehrere C₁-C₄-Alkoxy- oder C₁-C₄-Halogenalkoxygruppen substituiert ist, bedeuten,
R¹¹ und R¹² jeweils unabhängig Wasserstoff oder C₁-C₆-Alkyl bedeuten,
R³ und R⁸ jeweils unabhängig Wasserstoff, Chlor, CN, NO₂, C₁-C₆-Halogenalkyl, C₂-C₆-Halogenalkenyl, C₂-C₆-Halogenalkinyl, C₁-C₆-Halogenalkoxy, C₁-C₆-Halogenalkylthio, C₁-C₆-Halogenalkylsulfinyl, C₁-C₆-Halogenalkylsulfonyl, C₁-C₆-Halogenalkoxycarbonyl oder C₁-C₆-Alkyl, das gegebenenfalls durch eine oder mehrere C₁-C₄-Alkoxygruppen substituiert ist, bedeuten,
R⁴ und R⁷ jeweils unabhängig Wasserstoff, Halogen, C₁-C₆-Alkyl oder C₁-C₆-Alkoxy bedeuten,
R⁵ Wasserstoff, Halogen, CN, C₁-C₆-Alkyl, C₁-C₆-Halogenalkyl, C₁-C₆-Alkoxy, C₁-C₆-Alkylthio, C₁-C₆-Alkylsulfinyl oder Phenyl bedeutet, und
R⁶ Wasserstoff oder, falls R⁵ Wasserstoff bedeutet, C₁-C₆-Alkyl bedeutet, behandelt.

2. Verfahren zur Bekämpfung von parasitierenden oder saprophagen Milben in Gegenwart nützlicher Insekten, **dadurch gekennzeichnet, daß** man die Milben, ihre Brutstätten oder ihren Lebensraum mit einer parasitizid wirksamen Menge einer wie in Anspruch 1 beschriebenen Pyrimidinverbindung der Formel I in Kontakt bringt.

3. Verfahren nach Anspruch 1 oder 2, wobei die Verbindung der Formel I entweder einen der beiden Phenylringe unsubstituiert aufweist oder mindestens einer der Substituenten R³ und R⁸ nicht Wasserstoff bedeutet.

4. Verfahren nach Anspruch 3 mit einer Pyrimidinverbindung der Formel I, in der X¹ und X² jeweils O oder NR bedeuten,
R¹, R³, R⁸ und R¹⁰ jeweils unabhängig Wasserstoff oder Trifluormethyl bedeuten,
R² und R⁹ jeweils unabhängig Wasserstoff, Chlor
oder Fluor bedeuten, und
R⁴, R⁵, R⁶ und R⁷ Wasserstoff bedeuten.

5. Verfahren nach Anspruch 4, wobei die Pyrimidinverbindung der Formel I aus der Gruppe 4-[(4-Chlor-α,α,α-trifluor-*m*-tolyl)oxy]-6-[(α,α,α,4-tetrafluor-*m*-tolyl)oxylpyrimidin, 4-(α,α,α,4-Tetrafluor-*N*-methyl-*m*-toluidino) -6- [(α,α,α,4-tetrafluor-*m*-tolyl)oxy]pyrimidin und 4,6-Bis[(α,α,α 4-tetrafluor-*m*-tolyl)oxy]pyrimidin stammt.

6. Verfahren nach Anspruch 1 oder 2, wobei die nützlichen Insekten *Hymenoptera, Diptera* oder *Lepidoptera* sind.

7. Verfahren nach Anspruch 1 oder 2, wobei die parasitierenden Milben aus der Gruppe *Varroa jacobsoni, Acarapis woodi* und *Tropilaelaps clareae* stammen.

8. Verfahren nach Anspruch 6, wobei die nützlichen Insekten *Hymenoptera* und die *Hymenoptera Apidae* sind.

## Revendications

1. Méthode pour la protection des insectes utiles contre l'infestation et les dégâts causés par les mites parasitaires et saprophages, qui comprend l'application auxdits insectes, à leur site de reproduction ou à leur habitat une quantité efficace au plan parasiticide d'un composé de la pyrimidine répondant à la formule I, 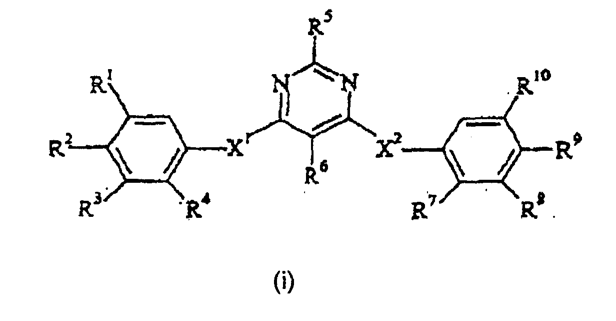 dans laquelle X¹ et X² sont chacun indépendamment O, S(O)ₙ, CO, CH₂, ou NR ;
n est 0, 1, ou 2 ;
R est l'hydrogène ou l'alkyle en C₁-C₆ ;
R¹ et R¹⁰ sont chacun indépendamment hydrogène ou halogène ;
R² et R⁹ sont chacun indépendamment hydrogène, halogène, CN, NO₂, C₁-C₆haloalkyle, alkoxy en C₁-C₆, alkylthio en C₁-C₆, NR¹¹R¹², alkoxycarbonyle en C₁-C₆ ou alkyle en C₁-C₆ substitués en option par un ou plusieurs groupes alkoxy en C₁-C₄ ou haloalkoxy en C₁-C₄ ;
R¹¹ et R¹² sont chacun indépendamment hydrogène ou alkyle en C₁-C₆ ;
R³ et R⁸ sont chacun indépendamment hydrogène, chlore, CN, NO₂, haloalkyle en C₁-C₆, haloalkényle en C₂-C₆, haloalkynyle en C₂-C₆, haloalkoxy en C₁-C₆, haloalkylthio en C₁-C₆, haloalkylsulfinyle en C₁-C₆, haloalkylsulfonyle en C₁-C₆, haloalkoxycarbonyle en C₁-C₆ ou alkyle en C₁-C₆ substitués en option par un ou plusieurs groupes alkoxy en C₁-C₆ ;
R⁴ et R⁷ sont chacun indépendamment hydrogène, halogène, alkyle en C₁-C₆ ou alkoxy en C₁-C₆;
R⁵ est hydrogène, halogène, CN, alkyle en C₁-C₆, l'haloalkyle en C₁-C₆, l'alkoxy en C₁-C₆, alkylthio en C₁-C₆, alkylsulfinyle en C₁-C₆ ou phényle ; et
R⁶ est hydrogène, ou lorsque R₅ est hydrogène, alkyle en C₁-C₆.

2. Une méthode pour la lutte contre les mites parasitaires ou saprophages en présence d'insectes utiles, qui comprend la mise au contact desdites mites, de leurs sites de reproduction ou de leurs habitats avec une quantité efficace au plan parasitaire du composé de la pyrimidine répondant à la formule I décrite à la revendication 1.

3. Méthode selon la revendication 1 ou 2 dans laquelle le composé répondant à la formule 1 comporte soit chacun des deux cycles phényliques non substitué soit au moins un des éléments R³ et R⁸ étant un autre substituant que l'hydrogène.

4. Méthode selon la revendication 3 comportant un composé de la pyrimidine répondant à la formule I, dans laquelle X¹ et X² sont chacun O ou NR ;
R^{1, R}3, R⁸ et R¹⁰ sont chacun indépendamment l'hydrogène ou le trifluorométhyle ;
R² et R⁹ sont chacun indépendamment hydrogène, chlore ou fluore ; et
R⁴, R⁵, R⁶ et R⁷ sont de l'hydrogène.

5. Méthode selon la revendication 4 dans laquelle le composé de la pyrimidine répondant à la formule I est sélectionné parmi le groupe constitué de 4-[(4-chloro-α,α,α-trifluoro-m-tolyl)oxy]-6-[(α,α,α, 4-tétrafluoro-N-méthyl-m-toluidino)-6-[(α,α,α,4-tétrafluoro-m-tolyl)oxypyrimidine ; 4-(α,α,α,4-tétrafluoro-N-méthyl-m-toludino)]-6-[(α,α,α, 4-tétrafluoro-m-tolyl)oxy]-pyrimidine et 4,6 bis [α,α,α 4-tétrafluoro-m-tolyl)oxy]pyrimidine.

6. Méthode selon la revendication 1 ou 2 dans laquelle les insectes utiles sont les *hyménoptères*, les *diptères* ou les *lépidoptères*.

7. Méthode selon la revendication 1 ou 2 dans laquelle les mites parasites sont sélectionnées parmi le groupe composé de *Varroa jacobsoni, Acarapis woodi* et *Tropilaelaps clareae*.

8. Méthode selon la revendication 6 dans laquelle les insectes utiles sont des *hyménoptères* et les *hyménoptères* sont des *apidaes.*
